# EUROPÄISCHE PATENTSCHRIFT

(11) **EP 0 728 656 B1**
(45) Veröffentlichungstag und Bekanntmachung des Hinweises auf die Patenterteilung: **15.03.2000**
(21) Anmeldenummer: 95119895.1
(22) Anmeldetag: 16.12.1995
(51) Int. Cl.: B62D 25/02

(54) **Karosseriesegment für ein Fahrzeug**
Body segment for a vehicle
Segment de carrosserie d'un véhicule

(30) Priorität: 17.02.1995 DE 19505364
(43) Veröffentlichungstag der Anmeldung: 28.08.1996
(73) Patentinhaber: Volkswagen Aktiengesellschaft, 38436 Wolfsburg (DE)
(72) Erfinder: Oehlerking, Conrad, Dipl.-Ing., D-38527 Meine (DE); Welsch, Frank, Dr., D-38108 Braunschweig (DE)

(56) Entgegenhaltungen:
- EP-A- 0 604 745
- DE-A- 3 018 811
- DE-A- 4 300 398
- FR-A- 2 690 404

## Beschreibung

Die Erfindung betrifft ein Karosseriesegment für ein Fahrzeug gemäß dem Oberbegriff des Patentanspruchs 1.

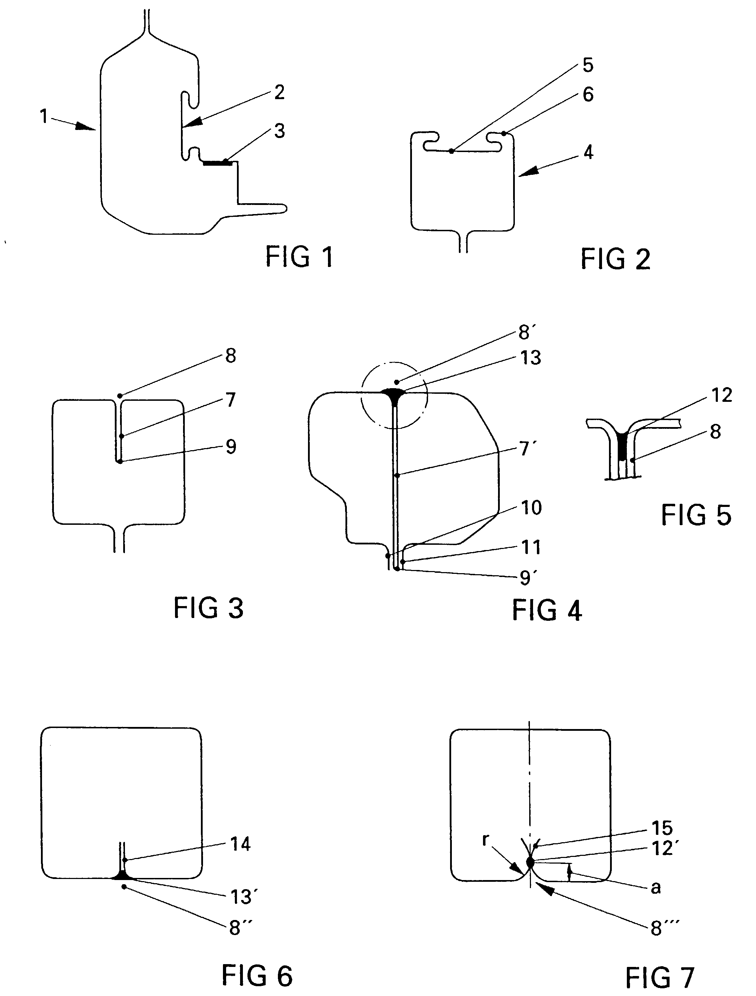

Gattungsgemäße Karosseriesegmente sind bekannt geworden aus der DE 43 00 398 A1 (B62D 65/00). In dieser Schrift wird für die Umformung von Aluminium gezeigt, auf welche Weise durch eine bestimmte Profilierung einerseits die Steifigkeit des gesamten Profils verbessert und andererseits die Möglichkeit für eine bequeme Anbindung von Anschlußteilen vorgesehen werden kann. Im einzelnen wird dort für den Werkstoff Aluminium erläutert, welche Vorteile die durch Rollformung hergestellten Profile gegenüber Leichtmetall-Strangpress-Hohlprofilen bieten. Ein solches Strangpress-Profil offenbart beispielsweise die US-PS 52 80 987 (B60N 1/08) in Figur 7 in Verbindung mit der Beschreibung in Spalte 6, Zeilen 1 - 6. Dieses Strangpress-Profil ist jedoch nicht integraler Bestandteil der Fahrzeugkarosserie, sondern nachträglich in diese eingebracht worden.

Der Erfindung liegt die Aufgabe zugrunde, gattungsgemäße Karosseriesegmente dahingehend weiterzuentwickeln, daß sowohl für Stahlwerkstoffe als auch für Leichtmetalle die Ausnutzung des Materials im Hinblick auf die Steifigkeit des einzelnen Profils und auf die erleichterte Anbindung von Anschlußteilen weiter verbessert wird.

Diese Aufgabe wird gelöst mit den kennzeichnenden Merkmalen des Patentanspruchs 1, die Unteransprüche betreffen besonders vorteilhafte Weiterbildungen.

Gemäß Anspruch 1 wird also in das die Funktion eines Trägerelementes übernehmende Karosseriesegment ein Element einer Führungsschiene gleich mit eingerollt. Dieses Element der Führungsschiene ist also integraler Bestandteil des Karosseriesegmentes und ist nicht als gesondertes Bauteil nachträglich an dem Karosseriesegment anzubringen. Das Element der Führungsschieneneinrichtung ist hier beispielsweise eine Gleitführung für einen Fahrzeugsitz oder eine Ladungssicherungseinrichtung. Die Versteifung des Karosseriesegmentes erfolgt nun zum einen durch die zusätzlich in das Profil eingebrachte Doppelwandrippe und zum anderen durch die gegenseitige Stützwirkung zwischen dem in der Gleitführung gehaltenen Funktionselement und dem Karosseriesegment selbst.

Gemäß einer besonders vorteilhaften Weiterbildung sind in die Blechplatine des Ausgangsmaterials vor der Rollumformung Zonen erhöhter Belastbarkeit eingebracht worden. Dies kann beispielsweise durch eine partielle Härtung oder Oberflächenbehandlung auf dem ebenen Blech erfolgen. Vorstellbar ist auch die Bereitstellung einer Blechplatine, die als sogenanntes tailored-blank aus einzelnen Abschnitten unterschiedlicher Blechdicke zusammengesetzt ist. Als tailored-blank sollen im Sinne dieser Erfindung aber auch solche Bleche verstanden werden, die bei weitgehend gleichmäßiger Blechdicke aus Platinenabschnitten mit unterschiedlichen Werkstoffqualitäten zusammengesetzt sind (siehe hierzu beispielsweise die Figur 1 in der EP 06 04 745 A1 - B62D 21/00). Innerhalb des Ausgangsmaterials werden Zonen erhöhter Belastbarkeit so angeordnet, daß sie selbst während der Rollumformung weitgehend von der Gestaltänderung ausgeschlossen werden und nach dem Abschluß der Rollumformung genau dort vorzufinden sind, wo die jeweiligen Belastungen des Karosseriesegmentes besonders hoch sind. Mit einem derartigen Arbeitsverfahren können also auch einteilige Hohlprofile mit beanspruchungsgerechten Teilabschnitten versehen werden. Bevorzugte Einsatzgebiete für derartig hergestellte Karosseriesegmente sind Türschwellerbereiche im Fahrzeug im Hinblick auf die Sitzanbindung und auch Längsträger im Bodenbereich des Fahrzeuges, denen entweder eine Fahrzeugsitzführung oder ein Ladungssicherungselement zugeordnet ist. Vorteilhaft ist auch die Gestaltung eines trägerartigen Karosseriesegmentes als Bestandteil eines Halterahmens für ein Schiebedach.

Bei der Erfindung wird die Versteifung des Karosseriesegmentes durch eine in das Innere des Hohlprofils gerichtete Doppelwandrippe erzeugt, die während der Rollumformung nach innen eingerollt wurde. Durch diese Maßnahme wird auch in das Innere des Hohlprofils Material eingebracht, so daß ohne Vergrößerung der Außenabmessungen zusätzlich Steifigkeit gewonnen wird. Gleiches gilt für die Lösungsvariante gemäß Patentanspruch 13. Auch diese Lösungsvariante zeigt eine nach innen gerichtete Doppelwandrippe. Allerdings wird diese durch nach innen abgestellte Flansche erzeugt, die nach Abschluß der Rollumformung berührend zur Anlage gebracht werden.

Zur weiteren Verbesserung der Steifigkeit können die offenen Enden der Doppelwandrippen ohne weitere Nahtvorbereitung direkt durch Schweißung - beispielsweise mit Schutzgas oder mittels Laser- oder Elektronenstrahl - geschlossen werden. Diese Maßnahme führt insbesondere zu einer Erhöhung der Torsionssteifigkeit.

Auch bei dem Karosseriesegment gemäß Patentanspruch 20 ist die Formgebung für Anschlußteile so gewählt worden, daß die durch die Verformung erzielte Steifigkeitserhöhung mit einer weiteren Funktion einhergeht. Gemäß Patentanspruch 20 ist die lichte Weite von Längsnuten mit Rechteckquerschnitt so bemessen, daß sie gegenüber den Außenabmessungen eines in die Längsnut einzusetzenden Klemmelementes ein vorgegebenes Untermaß aufweisen. Die Flanken der Längsnut übernehmen auf diese Weise auch noch Arretierfunktionen, und zwar insbesondere auch für bolzenartige Klemmteile mit Tannenbaumprofil. Letztere eignen sich besonders gut für die Anbringung von elektrischen Leitungen und Dichtungselementen aller Art.

An dieser Stelle wird darauf hingewiesen, daß in vorteilhafter Weise mehrere der vorstehend beschriebenen Lösungvarianten je nach Anwendungsfall in beliebiger Zahl miteinander kombinierbar sind.

Besonders vorteilhafte Ausführungsbeispiele der Erfindung sind in der Zeichnung dargestellt.

Man erkennt in Figur 1 ein als Türschweller 1 ausgebildetes Karosseriesegment, in das eine Führungsschiene 2 für einen Fahrzeugsitz integriert ist. Zu dieser Führungsschiene 2 gehört eine Lauffläche 3, die hier verdickt dargestellt ist. Durch diese zeichnerische Verdickung soll hervorgehoben werden, daß der Bereich dieser Lauffläche 3 besonders verschleißfest ausgeführt ist. Zu diesem Zweck ist vor dem Rollformvorgang der zugehörige Abschnitt in der Blechplatine beispielsweise durch Induktionshärtung verschleißfest gemacht worden. Dieser gehärtete Bereich ist dabei so in die Platine eingebracht worden, daß während des Rollformvorganges an diesem selbst keine Gestaltänderungen auftreten, demzufolge auch die Rollwerkzeuge nicht höher belastet werden. Eine damit vergleichbare Wirkung kann auch durch eine Platine erzielt werden, die vor dem Rollformvorgang nach Art eines tailored-blank zusammengestellt worden ist. Der für die Lauffläche 3 vorgesehene Bereich ist aus einem Blechabschnitt, der im Vergleich zu den benachbarten Blechbereichen eine größere Wanddicke aufweist oder aber im Hinblick auf Verschleißfestigkeit und Tragfähigkeit verbesserte Werkstoffeigenschaften besitzt. Derartige tailored-blanks sind vorzugsweise durch Laser-, Elektronenstrahl- oder Quetschnahtschweißung hergestellt worden. Gemäß einem besonders vorteilhaften Verfahrensmerkmal werden bei der Rollumformung die Fügestellen zwischen den einzelnen Platinenabschnitten gezielt nachgerollt, so daß etwa vorhandene Unebenheiten beseitigt werden und darüber hinaus die Naht in sich verfestigt wird. Diese Nachrollung kann je nach Lage der Schweißnaht sowohl auf die Oberfläche der Nahtraupe als auch auf die Nahtwurzel bezogen werden. In diesem Falle wird also der eigentlich der Formerzeugung dienende Rollformvorgang für weitere Maßnahmen zur Steigerung der Festigkeit des jeweils aus tailored-blanks zusammengesetzten Bauteils herangezogen.

Als weitere Möglichkeit ist in Figur 2 ein Längsträger gezeigt, der auf seiner Oberseite 4 eine Lauffläche 5 für Ladungssicherungselemente aufweist. Das in der Zeichnung nicht dargestellte Ladungssicherungselement kann beispielsweise ein auf der Lauffläche 5 verschiebbarer Befestigungsbock sein, an dem Halteösen vorgesehen sind. Vorzugsweise wird ein Karosseriesegment nach Art des Längsträgers 6 bei Personenkraftfahrzeugen im Kofferraumbereich und bei Nutzfahrzeugen im Bereich der Ladefläche eingesetzt. Ein weiterer Anwendungsfall für die Erfindung können auch Halterahmen mit integrierter Führungsschiene für das Schiebedach eines Fahrzeuges sein. Auch für Fahrzeuge mit Schiebetüren können die zugehörigen Führungsschienen Bestandteil eines erfindungsgemäß ausgeführten Karosseriesegmentes sein. Damit ergibt sich für die Integration von Trag- und Führungsfunktionen ein breites Anwendungsfeld.

Unabhängig vom konkreten Einbauort im Fahrzeug können ergänzend oder alternativ zu den bereits beschriebenen Ausführungsbeispielen die Karosseriesegmente hinsichtlich ihrer Profilgestaltung so ausgelegt werden, daß bei gleichen Außenabmessungen eine erhöhte Steifigkeit erzeugt wird. In diesem Zusammenhang wird insbesondere auf die Figuren 3 - 5 verwiesen. Diese Lösungsvarianten gemäß den Patentansprüchen 10 ff zeigen eingerollte Doppelwandrippen 7 bzw. 7' mit einem offenen Fußbereich 8 bzw. 8' und einem geschlossenen Ende 9 bzw. 9'. Durch das in das Innere des Hohlprofils zusätzlich eingebrachte Material wird sowohl die Biegesteifigkeit als auch die Torsionssteifigkeit des Karosseriesegmentes erhöht. Außerdem wird bei Verbauungen im Fahrzeug eine verbesserte Energieabsorption während eines Crashes erreicht. Besonders vorteilhaft ist die Erstreckung der Doppelwandrippe 9' durch das gesamte Profil hindurch in einen zwischen freie Enden 10 und 11 befindlichen Zwischenraum hinein. Die freien Enden 10 und 11 können dann zusammen mit der Doppelwandrippe verklebt, verschweißt oder durch Herumziehen eines der Enden gefalzt werden. In Einzelfällen kann zur weiteren Steigerung der Steifigkeit das offene Ende 8 durch eine Schweißnaht geschlossen werden, und zwar wie in Figur 4 veranschaulicht entweder durch Schutzgasschweißung oder mittels einer Schweißung, bei der ein Strahl mit hoher Energiedichte eingesetzt wird (Laser- oder Elektronenstrahlschweißen). Ein Beispiel für eine Laserschweißnaht ist schematisch in den Figuren 5 und 7 angedeutet. Charakteristisch für diese Form der Schweißnaht ist die Tatsache, daß die Nahtraupe selbst nicht aus der Kontur des Karosseriesegmentes heraussteht. Ein derartig zusammengefügtes Karosseriesegment kann damit auch im Bereich der Schweißnaht ebene Gegenstände aufnehmen. Im Gegensatz dazu steht die in Figur 4 dargestellte Schutzgasschweißnaht 13 aus der Kontur des Karosseriesegmentes heraus. Eine solche Nahtform sollte nur dann gewählt werden, wenn die umgebenden Bereiche außerhalb eines Sichtbereiches liegen oder keine weiteren Anschlußteile zur Anlage gebracht werden müssen.

Für die in Figuren 6 und 7 dargestellten Karosseriesegmente sind die eingerollten Doppelwandrippen 14 und 15 durch einwärts gerichtete Flansche gebildet, die während des Rollumformens nach innen hin abgestellt worden sind. Damit lassen sich Karosseriesegmente erzeugen, aus denen keine Blechteile mehr besonders hervorstehen. Das Schließen des Profils erfolgt zweckmäßigerweise in den Fußbereichen 8" bzw. 8''' mit einem der oben bereits beschriebenen Fügeverfahren. Als Besonderheit des Ausführungsbeispiels gemäß Figur 7 ist noch zu erwähnen, daß der Fußbereich 8''' relativ große Krümmungsradien mit Beträgen von 2 mm < r < 20 mm aufweist. Damit stoßen die abgestellten Flansche in einem Abstand von "a" unterhalb der eigentlichen Außenkontur des Karosseriesegmentes zusammen. Die Krümmungen sorgen dafür, daß auch bei gewissen Maßabweichungen und fertigungsbedingten Schwankungen immer eine eindeutige Linienberührung gewährleistet ist.

Dies ist für die anschließend vorzunehmende Verschweißung von besonders herausgehobener Bedeutung.

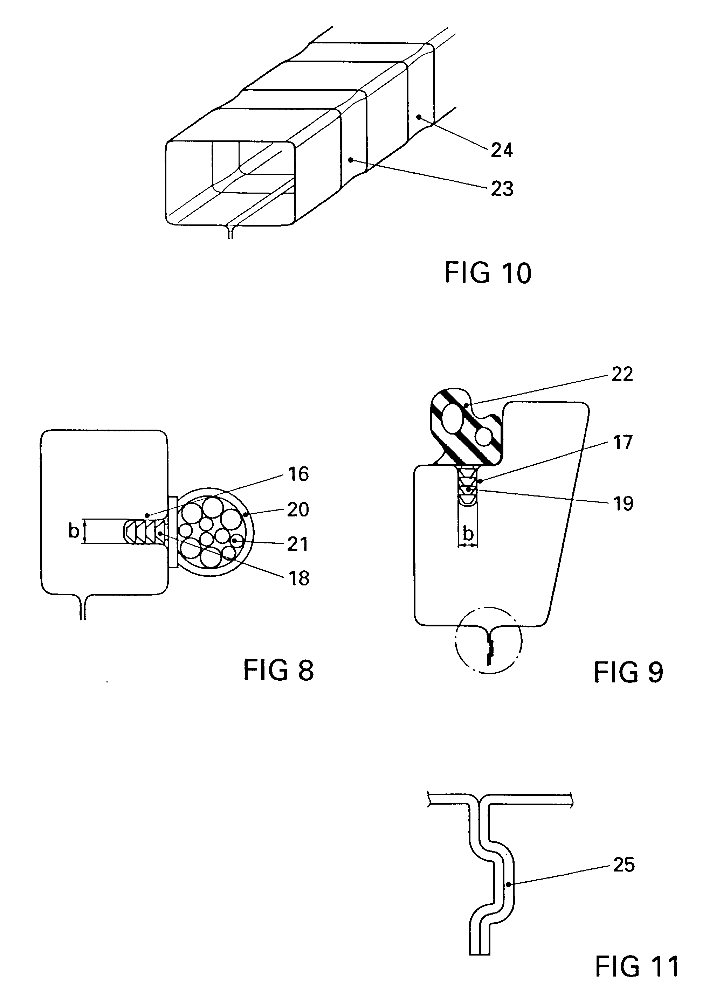

Die in den Figuren 8 und 9 dargestellten Karosseriesegmente zeigen eine weitere Erfindungsvariante mit Längsnuten 16 und 17, deren lichte Weite "b" gegenüber flexiblen Tannenbaumprofilen 18 und 19 ein vorgegebenes Untermaß aufweisen. Das Tannenbaumprofil 18 ist hier einer Befestigungsschelle 20 eines Kabelbaums 21 zugeordnet. Demgegenüber gehört das Tannenbaumprofil 19 zu einer umlaufenden Schlauchdichtung 22. In beiden Fällen wird hier also ein im wesentlichen bolzenartiges Klemmelement einer Funktionsbaugruppe in eine Längsnut eingepaßt, die ihrerseits auch zur Versteifung des gesamten Karosseriesegments beiträgt. Gegenüber Befestigungslöchern ergibt sich darüber hinaus der Vorteil, daß für die Positionierung der Klemmelemente ein gewisser Spielraum vorhanden ist und damit beispielsweise auch Maßabweichungen zwischen zwei fest voneinander beabstandeten Klemmelementen gut kompensiert werden können. Eine Kombination der Lösungsvarianten gemäß den Figuren 8 und 9 mit der Lösungsvariante gemäß den Figuren 1 und 2 kann beispielsweise so aussehen, daß an den Enden der Führungsschienen Anschlagpuffer aus flexiblem Material in die für die Führungsschiene vorgesehene Nut einklemmbar sind.

Ohne großen Aufwand können zur weiteren Steigerung der Festigkeit in dem Rollumformprozeß noch Stationen einbezogen werden, durch die beispielsweise Quersicken 23, 24 oder eine Clinch- bzw. Quetschverbindung 25 in das Karosseriesegment eingebracht werden. Für diese Maßnahme sind in die Rollwalzen entsprechende Buckel oder Noppen einzubringen, die nach Durchlaufen des Karosseriesegmentes zu den in der Zeichnung dargestellten Verformungen führen.

Zusammenfassend kann festgehalten werden, daß durch jede einzelne der vorgeschlagenen Lösungsvarianten die Werkstoffausnutzung im Hinblick auf Festigkeit und Funktionalität beträchtlich gesteigert werden kann. Insbesondere die synergetische Wirkung bei der Integration von Funktionalität und Festigkeit ermöglicht damit die Erzeugung von Karosseriesegmenten, die auch bei Verwendung von Stahl die Herstellung von Leichtbaufahrzeugen realisierbar machen. Dabei ist zu berücksichtigen, daß die erfindungsgemäßen Karosseriesegmente nicht nur als Trägerelement verwendbar sind, sondern auch als Bestandteile von oder Anbauten an Wandungen einsetzbar sind, um beispielsweise an bestimmten Stellen im Fahrzeug das Energieabsorptionsvermögen gezielt zu erhöhen.

## Patentansprüche

1. Hohlprofilartiges Karosseriesegment für ein Fahrzeug, das wenigstens ein Träger- oder Wandungselement (1) mit einem Anschlußbereich für ein Funktionsteil oder eine Funktionsbaugruppe aufweist, wobei in dem wenigstens einen Anschlußbereich des Träger- oder Wandungselementes (1) wenigstens ein Element einer Führungsschieneneinrichtung (2) integraler Bestandteil des aus einer zusammenhängenden Platine und durch Rollumformung erzeugten Karosseriesegmentes ist, gekennzeichnet durch eine in das Innere des Karosseriesegments gerichtete eingerollte Doppelwandrippe (8).

2. Karosseriesegment nach Anspruch 1, dadurch gekennzeichnet, daß das Trägerelement ein Türschweller (1) ist und die Führungsschieneneinrichtung (2) einem Fahrzeugsitz zugeordnet ist.

3. Karosseriesegment nach Anspruch 1, dadurch gekennzeichnet, daß das Trägerelement ein Längsträger im Bodenbereich des Fahrzeugs ist und das Führungsschienenelement wenigstens einem Fahrzeugsitz oder einem Ladungssicherungselement zugeordnet ist.

4. Karosseriesegment nach Anspruch 1, dadurch gekennzeichnet, daß das Trägerelement Bestandteil eines Halterahmens für ein Schiebedach ist.

5. Karosseriesegment nach Anspruch 1, dadurch gekennzeichnet, daß in dem Ausgangsmaterial der Platine Zonen mit unterschiedlichen Fertigkeitseigenschaften vorgesehen sind.

6. Karosseriesegment nach Anspruch 5, dadurch gekennzeichnet, daß die Platine aus Abschnitten mit unterschiedlichen Werkstoffeigenschaften zusammengesetzt ist.

7. Karosseriesegment nach Anspruch 5, dadurch gekennzeichnet, daß die Platine aus Abschnitten unterschiedlicher Wanddicke zusammengesetzt ist.

8. Karosseriesegement nach Anspruch 5, dadurch gekennzeichnet, daß wenigstens eine der Zonen zur Erzeugung besonderer Werkstoffeigenschaften vor der Rollumformung gehärtet worden ist.

9. Karosseriesegment nach Anspruch 6 oder 7, dadurch gekennzeichnet, daß bei der Rollumformung die Übergangsbereiche und/oder Schweißnähte zwischen den einzelnen Abschnitten der Platine im Sinne einer Verfestigung und/oder Einebnung nachgerollt worden sind.

10. Karosseriesegment nach einem der vorhergehenden Ansprüche, dadurch gekennzeichnet, daß die Doppelwandrippe (8') eine den Querschnitt des Karosseriesegments durchsetzende Ausdehnung aufweist.

11. Karosseriesegment nach Anspruch 10, dadurch gekennzeichnet, daß freie Enden (10, 11) der Platine nach der Rollumformung an einem geschlossenen Ende (9') der Doppelwandrippe (8') zur Anlage gebracht sind.

12. Karosseriesegment nach einem der vorhergehenden Ansprüche, dadurch gekennzeichnet, daß die Doppelwandrippe (8", 8"') durch nach innen abgestellte Flansche erzeugt ist, die ihrerseits nach der Rollumformung zumindest linienberührend zur Anlage gebracht sind.

13. Karosseriesegment nach Anspruch 12, dadurch gekennzeichnet, daß durch Krümmungen in einem Fußbereich (8"') der nach innen abgestellten Flansche auf einer Außenseite des Karosseriesegmentes eine Längsnut erzeugt ist, deren Nutgrund durch die Berührungslinie der Flansche gebildet ist.

14. Karosseriesegment nach einem der vorhergehenden Ansprüche, dadurch gekennzeichnet, daß ein offenes Ende der Doppelwandrippe (7, 14, 15) durch Klebung geschlossen ist.

15. Karosseriesegment nach einem der Ansprüche 1 bis 13, dadurch gekennzeichnet, daß ein offenes Ende der Doppelwandrippe (7, 14, 15) durch eine Schweißnaht (12, 13) geschlossen ist.

16. Karosseriesegment nach Anspruch 15, dadurch gekennzeichnet, daß die Schweißnaht (13, 13') durch Schutzgasschweißen hergestellt ist.

17. Karosseriesegment nach Anspruch 15, dadurch gekennzeichnet, daß die Schweißnaht (12, 12') durch Laserschweißen hergestellt ist.

18. Karosseriesegment nach Anspruch 15, dadurch gekennzeichnet, daß die Schweißnaht (12, 12') durch Elektronenstrahlschweißen hergestellt ist.

19. Karosseriesegment nach einem der vorhergehenden Ansprüche, dadurch gekennzeichnet, daß quer zu einer Längsachse des Karosseriesegmentes Sicken (23, 24) eingerollt sind.

20. Karosseriesegment nach einem der vorhergehenden Ansprüche, dadurch gekennzeichnet, daß der Anschlußbereich durch eine Längsnut (16, 17) mit rechteck- oder trapezartigem Querschnitt gebildet ist, deren lichte Weite (b) so bemessen ist, daß sie gegenüber den Außenabmessungen eines in die Längsnut (16, 17) einzusetzenden Klemmelementes (18, 19) ein vorgegebenes Untermaß aufweist.

21. Karosseriesegment nach Anspruch 20, dadurch gekennzeichnet, daß die Längsnut zur Aufnahme eines Klemmelementes (18) hergerichtet ist, das seinerseits ein Halteglied für wenigstens eine elektrische Leitung (21) ist.

22. Karosseriesegment nach Anspruch 20, dadurch gekennzeichnet, daß die Längsnut (17) zur Aufnahme eines Klemmelementes (19) hergerichtet ist, das Bestandteil eines Dichtelementes (22) ist.

## Claims

1. Hollow profile-type body segment for a vehicle, which includes at least one carrier or wall element (1) with a connection region for a functional part or a functional subassembly, wherein in the at least one connection region of the carrier or wall element (1) at least one element of a guide rail arrangement (2) is an integral component of the body segment produced from a continuous plate or by rolling deformation, characterised by a rolled double-walled rib (8) directed towards the inside of the body segment.

2. Body segment according to claim 1, characterised in that the carrier element is a door sill (1) and the guide rail arrangement (2) is allocated to a vehicle seat.

3. Body segment according to claim 1, characterised in that the carrier element is a longitudinal carrier in the floor region of the vehicle and the guide rail element is allocated to at least one vehicle seat or load-securing element.

4. Body segment according to claim 1, characterised in that the carrier element is a component of a holding frame for a sun roof.

5. Body segment according to claim 1, characterised in that zones with different strength properties are provided in the initial material of the plate.

6. Body segment according to claim 5, characterised in that the plate is formed from portions with different material properties.

7. Body segment according to claim 5, characterised in that the plate is formed from portions with different wall thicknesses.

8. Body segment according to claim 5, characterised in that at least one of the zones has been hardened to produce particular material properties before the rolling deformation.

9. Body segment according to claim 6 or 7, characterised in that during the rolling deformation the transitional regions and/or weld seams between the individual portions of the plate are re-rolled for strengthening and/or levelling purposes.

10. Body segment according to one of the preceding claims, characterised in that the double-walled rib (8') extends through the cross-section of the body segment.

11. Body segment according to claim 10, characterised in that free ends (10, 11) of the plate are brought into position at a closed end (9') of the double-walled rib (8') after the rolling deformation.

12. Body segment according to one of the preceding claims, characterised in that the double-walled rib (8", 8''') is produced by inwardly set-back flanges which for their part are brought into position at least in linear contact after the rolling deformation.

13. Body segment according to claim 12, characterised in that a longitudinal groove is produced by means of curved regions in a foot region (8"') of the inwardly set-back flanges on an outer side of the body segment, the groove bottom being formed by the contact line of the flange.

14. Body segment according to one of the preceding claims, characterised in that an open end of the double-walled rib (7, 14, 15) is closed by adhesive.

15. Body segment according to one of claims 1 to 13, characterised in that an open end of the double-walled rib (7, 14, 15) is closed by a weld seam (12, 13).

16. Body segment according to claim 15, characterised in that the weld seam (13, 13') is produced by inert gas-shielded arc welding.

17. Body segment according to claim 15, characterised in that the weld seam (12, 12') is produced by laser welding.

18. Body segment according to claim 15, characterised in that the weld seam (12, 12') is produced by electron-beam welding.

19. Body segment according to one of the preceding claims, characterised in that beads (23, 24) are rolled in transverse to a longitudinal axis of the body segment.

20. Body segment according to one of the preceding claims, characterised in that the connection region is formed by a longitudinal groove (16, 17) with a rectangular or trapezoidal cross-section, the clear width (b) of which is dimensioned such that it is smaller, by a predetermined amount, than the outer dimensions of a clamping element (18, 19) to be inserted into the longitudinal groove (16, 17).

21. Body segment according to claim 20, characterised in that the longitudinal groove is arranged to receive a clamping element (18) which for its part is a holding member for at least one electric cable (21).

22. Body segment according to claim 20, characterised in that the longitudinal groove (17) is arranged to receive a clamping element (19) which is a component of a sealing element (22).

## Revendications

1. Segment de carrosserie en forme de profilé creux pour un véhicule, qui comprend au moins un élément porteur ou de paroi (1) comportant une zone de liaison pour une pièce fonctionnelle ou un ensemble fonctionnel, dans la zone de liaison au nombre d'au moins une de l'élément porteur ou de paroi (1) au moins un élément d'un dispositif formant rail de guidage (2) faisant partie intégrante du segment de carrosserie fabriqué à partir d'un flan d'un seul tenant et par roulage, caractérisé par une nervure à double paroi roulée (8), orientée vers l'intérieur du segment de carrosserie.

2. Segment de carrosserie selon la revendication 1, caractérisé en ce que l'élément porteur est un bas de marche (1), et le dispositif formant rail de guidage (2) est associé à un siège de véhicule.

3. Segment de carrosserie selon la revendication 1, caractérisé en ce que l'élément porteur est un longeron situé dans la zone de plancher du véhicule, et l'élément formant rail de guidage est associé à au moins un siège de véhicule ou à un élément d'arrimage de chargement.

4. Segment de carrosserie selon la revendication 1, caractérisé en ce que l'élément porteur est un élément constitutif d'un cadre de retenue pour un toit ouvrant.

5. Segment de carrosserie selon la revendication 1, caractérisé en ce que des zones présentant des propriétés de résistance mécanique différentes sont prévues dans la matière de base du flan.

6. Segment de carrosserie selon la revendication 5, caractérisé en ce que le flan est constitué de portions possédant des propriétés de matériau différentes.

7. Segment de carrosserie selon la revendication 5, caractérisé en ce que le flan est constitué de portions présentant des épaisseurs de paroi différentes.

8. Segment de carrosserie selon la revendication 5, caractérisé en ce qu'au moins une des zones a été trempée avant le roulage pour obtenir des propriétés de matériau particulières.

9. Segment de carrosserie selon la revendication 6 ou 7, caractérisé en ce que, lors du roulage, les zones de transition et/ou les soudures entre les différentes portions du flan font l'objet d'un roulage de finition dans le but de les consolider et/ou de les aplanir.

10. Segment de carrosserie selon l'une des revendications précédentes, caractérisé en ce que la nervure à double paroi (8') comporte un prolongement qui traverse la section transversale du segment de carrosserie.

11. Segment de carrosserie selon la revendication 10, caractérisé en ce que, après le roulage, des extrémités libres (10, 11) du flan sont appliquées contre une extrémité fermée (9') de la nervure à double paroi (8').

12. Segment de carrosserie selon l'une des revendications précédentes, caractérisé en ce que la nervure à double paroi (8", 8''') est réalisée par des rebords repliés vers l'intérieur qui, pour leur part, sont appliqués l'un contre l'autre après le roulage pour créer au moins un contact linéaire.

13. Segment de carrosserie selon la revendication 12, caractérisé en ce que, par le biais de cintrages réalisés dans la zone de pied (8''') des rebords repliés vers l'intérieur, une gorge longitudinale dont le fond de gorge est formé par la ligne de contact des rebords est réalisée sur un côté extérieur du segment de carrosserie.

14. Segment de carrosserie selon l'une des revendications précédentes, caractérisé en ce qu'une extrémité ouverte de la nervure à double paroi (7, 14, 15) est fermée par collage.

15. Segment de carrosserie selon l'une des revendications 1 à 13, caractérisé en ce qu'une extrémité ouverte de la nervure à double paroi (7, 14, 15) est fermée par une soudure (12, 13).

16. Segment de carrosserie selon la revendication 15, caractérisé en ce que la soudure (13, 13') est réalisée par soudage à l'arc sous protection gazeuse.

17. Segment de carrosserie selon la revendication 15, caractérisé en ce que la soudure (12, 12') est réalisée par soudage au laser.

18. Segment de carrosserie selon la revendication 15, caractérisé en ce que la soudure (12, 12') est réalisée par soudage par bombardement électronique.

19. Segment de carrosserie selon l'une des revendications précédentes, caractérisé en ce que des moulures (23, 24) sont réalisées par roulage transversalement à l'axe longitudinal du segment de carrosserie.

20. Segment de carrosserie selon l'une des revendications précédentes, caractérisé en ce que la zone de liaison est formée par une gorge longitudinale (16, 17) à section rectangulaire ou trapézoïdale dont le diamètre intérieur (b) est calculé pour qu'elle présente une sous-cote prédéfinie par rapport aux dimensions extérieures d'un élément de fixation (18, 19) insérable dans la gorge longitudinale (16, 17).

21. Segment de carrosserie selon la revendication 20, caractérisé en ce que la gorge longitudinale est conçue pour recevoir un élément de fixation (18) qui, pour sa part, est un élément de retenue pour au moins une ligne électrique (21).

22. Segment de carrosserie selon la revendication 20, caractérisé en ce que la gorge longitudinale (17) est conçue pour recevoir un élément de fixation (19) qui fait partie intégrante d'un élément d'étanchéité (22).
